# EUROPÄISCHE PATENTANMELDUNG

(11) **EP 2 779 527 A1**
(43) Veröffentlichungstag der Anmeldung: **17.09.2014**
(21) Anmeldenummer: 13159537.3
(22) Anmeldetag: 15.03.2013
(51) Int. Cl.: H04L 12/14

(54) **System und Verfahren zur Analyse des Energieverbrauchs von elektrischen Verbrauchern in einem Netz**

(71) Anmelder: Yetu AG, 10437 Berlin (DE)
(72) Erfinder: Schläffer, Christopher, 53227 Bonn (DE); Möckel, Peter, Bethesda, MD 20814 (US)
(74) Vertreter: Gulde & Partner

(57) **Zusammenfassung**

Das erfindungsgemäße Verfahren zur Analyse und Anzeige des Energieverbrauchs von elektrischen Verbrauchern umfasst grundsätzlich folgende Schritte: Bereitstellen mindestens eines Verbrauchernetzes umfassend eine Mehrzahl von zusammen geschalteten elektrischen Verbrauchern; Abtasten von Gesamtstrom, Spannung und Phasenverschiebung des Verbrauchernetzes mit einer Abtastrate von kleiner 5 Hz; Senden der abgetasteten Messwerte über das Internet an ein Mittel zur Verbrauchererkennung; Empfangen der abgetasteten Messwerte über das Internet durch das Mittel zur Verbrauchererkennung; Bestimmen einzelner Verbraucher in den Messwerten durch das Mittel zur Verbrauchererkennung umfassend: Bestimmen temporaler Regelmäßigkeiten individueller Verbraucher durch eine Spektralanalyse der Messwerte, und/oder Erzeugen von Verbrauchermodellen für einzelne Verbraucher durch Modellierung von Einzelphänomenen in den Messwerten mittels Klassifikatoren, und Visualisieren des Energieverbrauchs in dem Verbrauchernetz.

## Beschreibung

Die vorliegende Erfindung betrifft ein System und ein Verfahren zur Analyse des Energieverbrauchs von elektrischen Verbrauchern in einem elektrischen Netz. Insbesondere betrifft die Erfindung ein System und ein Verfahren zur Bestimmung des Energieverbrauchs einzelner Verbraucher in einem Privathaushalt allein aus den ausgegebenen Werten eines Stromzählers. Das System wird dabei als Home Energy Management System (kurz HEMS) bezeichnet.

### Stand der Technik

Es ist bekannt den Energieverbrauch beispielsweise in einer Wohnung oder einem Einfamilienhaus über einen sogenannten "Stromzähler" zu bestimmen.

Dieser Zähler dient der Verbrauchsabrechnung gegenüber einem Energieversorgungsunternehmen und ermittelt aus den Momentanwerten von Strom und Spannung die genutzte Energie, die aus dem Stromnetz bezogen wurde. Dazu bedarf es allerdings des persönlichen Ablesens des Energieverbrauchs. Der Verbrauch wird üblicherweise jährlich abgerechnet. Demzufolge hat der Nutzer nur eine sehr geringe Transparenz über die Kosten einzelner elektrischer Verbraucher in seinem Netz.

In jüngster Zeit werden in Privathaushalten sogenannte "intelligente Stromzähler" oder "smart meter" verbaut. Intelligente Stromzähler verfügen über einen Prozessor und können erhobene Daten automatisch an das Energieversorgungsunternehmen über das Internet übertragen. Durch die Zusammenschaltung des Stromzählers in Privathaushalten mit dem Internetanschluss können grundsätzlich interaktive Auswertungen des Stromverbrauchs vorgenommen werden. Jedoch kann damit lediglich der Gesamtverbrauch dargestellt werden und nicht der Verbrauch einzelner elektrischer Verbraucher in dem Privathaushalt.

Auch sind bereits intelligente elektrische Verbraucher bekannt, die über die Eingabe des Strompreises die Kosten des Verbrauchs selbst darstellen können. Allerdings verfügen nur wenige Produkte über eine solche Möglichkeit. Zudem ist es für den Nutzer schwierig, den Überblick zu wahren, wenn die Kosten an jedem Gerät einzeln abgelesen werden müssen.

Aus der GB 2461915 A ist zudem Verbrauchsmessgerät bekannt, welches eine nicht-invasive Verbrauchsüberwachung einzelner Verbraucher über einen vom Stromzähler separierten Sensor in Kombination mit einer Analysesoftware offenbart. Die Daten werden dabei mit einer Frequenz von 50-60 Hz erhoben.

Der Verbau eines separaten Stromsensors erhöht jedoch die Kosten. Ein intelligenter Stromzähler tastet den Energieverbrauch in der Regel mit einer viel geringeren Frequenz im Bereich weniger Herz ab. Die geringe Abtastrate macht es aber schwierig, einzelne Verbraucher im abgetasteten Signal zu bestimmen.

Daher bedarf es weiterhin einer kostengünstigen und einfachen Lösung, einzelne elektrische Verbraucher in einem Netz aus Verbrauchern automatisch zu erkennen.

### Offenbarung der Erfindung

### Erfindungsgemäß wird

Das erfindungsgemäße Verfahren zur Analyse und Anzeige des Energieverbrauchs von elektrischen Verbrauchern umfasst grundsätzlich folgende Schritte: Bereitstellen mindestens eines Verbrauchernetzes umfassend eine Mehrzahl von zusammen geschalteten elektrischen Verbrauchern; Abtasten von Gesamtstrom, Spannung und Phasenverschiebung des Verbrauchernetzes mit einer Abtastrate von kleiner 5 Hz; Senden der abgetasteten Messwerte über das Internet an ein Mittel zur Verbrauchererkennung; Empfangen der abgetasteten Messwerte über das Internet durch das Mittel zur Verbrauchererkennung; Bestimmen einzelner Verbraucher in den Messwerten durch das Mittel zur Verbrauchererkennung umfassend mindestens einen der folgenden Schritte:
Bestimmen temporaler Regelmäßigkeiten individueller Verbraucher durch eine Spektralanalyse der Messwerte, und
Erzeugen von separaten und/oder gemeinsamen Verbrauchermodellen für einzelne Verbraucher durch Modellierung von Einzelphänomenen in den Messwerten mittels Klassifikatoren, und Visualisieren des Energieverbrauchs in dem Verbrauchernetz.

Das Eingesetzte Verfahren basiert Grundsätzlich auf der Disaggregation von Verbrauchern in privaten Haushalten einzig auf Basis der Daten handelsüblicher elektronischer Stromzähler.

Der Vorteil des technischen Ansatzes ist, dass herkömmliche intelligente Stromzähler, die "Smart Meter", verwendet werden können. Die Mess- und Analysefunktion erfordert keine zusätzlichen Geräte im Heimbereich. Die Nachteile der Datenmessung in dem herkömmlichen elektronischen Stromzähler, insbesondere niedrige Messfrequenz werden durch intelligente Analyseverfahren ausgeglichen. Es müssen keine neuen, aufwändigeren Stromzähler oder zusätzliche Messstellen eingesetzt werden und die Gesamtlösung ist wirtschaftlich günstig.

Das Verfahren nutzt die durch den Stromzähler ohnehin erhobenen Daten und führt eine Analyse durch. Der Stromzähler ermittelt die gesamte Leistungsaufnahme am Zählpunkt, also pro Haushalt insgesamt. Des Weiteren erhebt er einige Sekundärparameter wie die Blindleistung und die Phasenverschiebung. Zudem werden diese Daten mit einer sehr niedrigen Frequenz von 1 Hz bereitgestellt. Dies ist ein gesetzliches Erfordernis in Deutschland.

Das eingesetzte Verfahren kann als "Low Frequency Sampling" (LFS) bezeichnet werden, und beeinflusst die Methodik zur automatischen Erkennung der in einem Haushalt eingeschalteten elektrischen Geräte auf der Basis von Merkmalsextraktions- und Mustererkennungsverfahren für die Einzelgeräteerkennung und für die Disaggregation von elektrischen Endverbrauchern anhand der Daten eines Smart Meters.

Das Verfahren basiert auf einer Messung durch einen digitalen Stromzähler (Smartmeter) mit 1 Hz Abtastrate der Merkmale "Stromstärke", "Spannung" und "Phasenverschiebung". Daraus ergeben sich die Hauptmerkmale Schein-, Wirk-und Blindleistung. Die Messwerte Stromstärke, Spannung, Phasenverschiebung sowie die sich daraus ergeben Hauptmerkmale sind der Ausgangspunkt für die Merkmalsextraktion und die Klassifizierungsverfahren ist.

Die separaten und/oder gemeinsamen Verbrauchermodelle können vorteilhafterweise zusätzlich für "Machine Learning" Verfahren genutzt werden, die zur automatisierten Verbesserung des Erkennungssystem dienen.

In einem Ausführungsbeispiel werden lediglich separate Verbrauchermodelle für einzelne Verbraucher durch Modellierung von Einzelphänomenen in den Messwerten mittels Klassifikatoren erzeugt.

Bevorzugt ist eine Vielzahl von Verbrauchernetzen vorhanden und in dem Mittel zur Verbrauchererkennung werden die Messwerte der Vielzahl von Verbrauchernetzen zur Bestimmung einzelner Verbraucher in einem Verbrauchernetz verwendet. Das gleichzeitige Einfließen von Messwerten aus anderen Heimbereichen vereinfacht die Klassifikation dahingehend, dass schneller ähnliche Muster erkannt werden können.

Der Nutzer kann zudem über einen Webservice die Erkennung von Verbrauchern in Verbrauchernetz bestätigen oder ändern. Er kann hier direkt Einfluss nehmen und dieser Einfluss kann auch bei der Verbrauchererkennung in anderen Verbrauchernetzen berücksichtigt werden.

Die Spektralanalyse wird für die Langzeiterkennung von Verbrauchern in den Messwerten eingesetzt. Sie kann aber auch zusätzlich oder alternativ zur Bestätigung bzw. Bekräftigung der Früherkennung von Einzelphänomen in den Messwerten genutzt wird.

Die Abtastfrequenz ist bevorzugt kleiner 2 Hz ist, noch bevorzugter ist sie kleiner gleich 1 Hz und größer gleich 0,5 Hz, bevorzugt größer gleich 0,2 Hz. Die

Energieauflösung der Abtastung ist kleiner 5 Watt, bevorzugt kleiner 2 Watt. Noch bevorzugter beträgt sie 1 Watt.

Nutzerprofile, historische Daten, Wetterdaten oder Jahreszeiten können in die Merkmalsextraktion einfließen. Dies ermöglicht eine verbesserte Klassifikation.

Ferner ist ein System zur Analyse und Anzeige des Energieverbrauchs von elektrischen Verbrauchern vorgeschlagen. Das System umfasst: ein Verbrauchernetz umfassend eine Mehrzahl von zusammen geschalteten elektrischen Verbrauchern; einen intelligenten Stromzähler, der mit dem Verbrauchernetz elektrisch verbunden und geeignet ist, den Gesamtstrom, die Spannung und die Phasenverschiebung des Verbrauchernetzes mit einer Frequenz von kleiner 5 Hz und größer gleich 0,2 Hz abzutasten; ein Kommunikationsmodul mit einem ersten Datenspeicher, geeignet die Messwerte des intelligenten Stromzählers auszulesen und zwischen zu speichern, ein Homegateway zum Auslesen der Messwerte aus dem Kommunikationsmodul und Versenden der Messwerte über das Internet; eine Datensammlung zum Empfangen der vom Homegateway gesendeten Messwerte; ein Mittel zur Verbrauchererkennung zur Erkennung einzelner Verbraucher im Verbrauchernetz aus den empfangenen Messwerten;
und eine Visualisierungseinheit zur Anzeige des Energieverbrauchs der Verbraucher des Verbrauchernetzes.

Das Kommunikationsmodul ist bevorzugt in dem intelligenten Stromzähler integriert, also Teil des Stromzählers.

Eine Vielzahl von Verbrauchernetzen kann vorhanden sein. In dem Mittel zur Verbrauchererkennung werden die Messwerte der Vielzahl von Verbrauchernetzen zur Bestimmung einzelner Verbraucher in einem Verbrauchernetz verwendet werden.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
- Figur 1: zeigt ein Blockschaltbild eines erfindungsgemäßen Systems zur Analyse des Energieverbrauchs von elektrischen Verbrauchern,
- Figur 2: zeigt schematisch den grundsätzlichen Ablauf des Klassifikations- und Erkennungsverfahrens,
- Figur 3: zeigt das Eingangssignal einer Waschmaschine,
- Figur 4: zeigt die Fourier-Transformierte der Figur 3,
- Figur 5: zeigt die Fourier-Transformierte des Eingangssignals eines Wäschetrockners,
- Figur 6: zeigt ein erfindungsgemäßes Modell der Klassifikation anhand der Spektralanalyse,
- Figur 7: zeigt einen Scatterplott von Koeffizienten aus einer Spektralanalyse,
- Figur 8: zeigt ein Ergebnis einer erfindungsgemäßen Einzelphänomenanalyse,
- und Figur 9: zeigt ein erfindungsgemäßes Modell der Einzelphänomenanalyse.

### Ausführungsformen der Erfindung

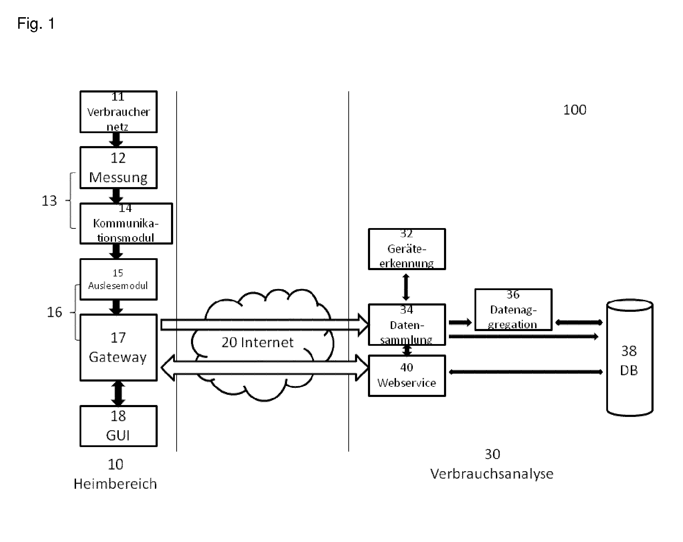

In der Figur 1 ist ein erfindungsgemäßes System 100 zur Analyse des Energieverbrauchs eines Netzes von elektrischen Verbrauchern 11 dargestellt. Das System 100 kann vertikal in drei Bereiche eingeteilt werden: Den Heimbereich 10, das Internet 20 und die Verbrauchs- und Verbraucheranalyse 30 auf einem vom Heimbereich 10 entfernten Server.

Der Heimbereich 10 besteht dabei zunächst einmal aus einem Netz von elektrischen Verbrauchern 11. Mit "Heimbereich" ist hier ein Privathaushalt gemeint. Er kann eine Wohnung, ein Einfamilienhaus, eine Doppelhaushälfte oder ähnliches umfassen. Im Heimbereich 10 werden über den intelligenten Stromzähler 13 Energieverbrauchsparameter Strom, Spannung und Phasenverschiebung jede Sekunde zur Verfügung gestellt. Daraus kann die Schein-, Wirk- und Blindleistung bestimmt werden. Dies geschieht pro Haushalt insgesamt. Es werden also vom Stromzähler 13 keine einzelnen Verbraucher des Netzes von Verbrauchern 11 identifiziert.

Die Abtastwerte der Messung 12 werden von einem Kommunikationsmodul 14 abgegriffen und der Gegenstelle 16, dem sogenannten Homegateway bereit gestellt um die Daten, bevorzugt verschlüsselt, an ein Mittel zur Verbrauchererkennung 32, kurz auch als Geräteerkennung bezeichnet, auf einem vom Heimbereich 10 entfernten Server zu übertragen.

Der erfindungsgemäße intelligente Stromzähler 13 stellt die Werte Strom, Spannung und Phasenverschiebung mit einer Abtastrate von kleiner 5 Hz, bevorzugt kleiner 2 Hz, noch bevorzugter mit einer Abtastrate von kleiner gleich 1 Hz und größer gleich 0,5 Hz, bevorzugt größer gleich 0,2 Hz nach außen zu Verfügung. Die Leistungswerte weisen dabei eine Genauigkeit (Auflösung) von kleiner 5 Watt, bevorzugt kleiner 2 Watt, noch bevorzugter von 1 Watt auf.

Der intelligente Stromzähler 13 ist mit einem Kommunikationsmodul 14 verbunden. Das Kommunikationsmodul 14 ist in einer bevorzugten Ausführungsform direkt in dem intelligenten Stromzähler 13 verbaut. Das Kommunikationsmodul 14 liest die abgetasteten Messwerte 12 des Stromzählers 13 elektronisch aus, speichert sie zwischen und hält die gespeicherten Werte für die Gegenstelle 16 bereit. Die Anbindung der Gegenstelle 16 an das Kommunikationsmodul 14 kann über die Stromleitung (Powerline Communications PLC), per Funkschnittstelle oder direkt per Kabel erfolgen.

Die Gegenstelle 16, das Homegateway, ist eine spezielle Vorrichtung, welche sich im Heimbereich 10 des Nutzers befindet. Sie verbindet sich mit dem Kommunikationsmodul 14 und liest die zur Verfügung gestellten Messwerte aus. Diese Messwerte werden über eine Schnittstelle und das Internet 20 der Verbrauchsanalyse 30 bereitgestellt. Dies kann funkbasiert oder kabelgebunden geschehen.

Die Gegenstelle 16 besteht aus einem Auslesemodul 15 und einem Internetgateway 17. Auslesemodul 15 und Internetgateway 17 können in einer Vorrichtung, dem Homegateway, gemeinsam angeordnet sein, Jedoch können sie auch zwei getrennte Einheiten bilden. Dann kann das Internetgateway 17 als normaler Internetrouter ausgebildet sein. Es muss dann also nur ein Auslesemodul 15 zwischen Kommunikationsmodul 14, welches bevorzugt im intelligenten Stromzähler 13 integriert ist, und Internetgateway 17 angeordnet werden. Dies vereinfacht die Installation weiter.

Die Gegenstelle 16 verbindet sich mit einer Datensammelung 34 über das Internet 20. Es wird geprüft, ob die Gegenstelle 16 bekannt ist. Sollte es eine unbekannte Gegenstelle 16 sein, werden alle Daten verworfen. Wird die Gegenstelle 16 als bekannt erkannt, werden die Daten zur Weiterverarbeitung weitergeleitet bzw. gespeichert um bei Verbindungsabbrüchen einen Datenverlust zu vermeiden.

Des Weiteren kann die Gegenstelle 16 als zentraler Internetzugang im Heimbereich 10 dienen und kann dem Endnutzer eine Portalfunktion zur Verfügung stellen, die am TV, mobilen Endgerät oder am Computer genutzt werden kann. Dafür können in einem Ausführungsbeispiel diverse Netzwerkanbindungen in der Gegenstelle 16 bereitgestellt sein.

Von der Datensammlung 34 werden die abgetasteten Messwerte auf dem Server an die Geräteerkennung 32 weitergeleitet. Die Daten werden für eine bestimmte Zeit zwischengespeichert und erst dann verworfen wenn ein Ausschaltevent für den Verbraucher erkannt wurde. Bevorzugt werden die Daten aber auch an eine Datenaggregationseinheit 36, eine Datenbank 38 und an einen Webservice 40 weitergeleitet.

In der Geräteerkennung 32 werden die Messwerte vorverarbeitet und die bereits erkannten Daten aus dem aktuellen Datensatz extrahiert. Es werden die Messwerte in der Erkennung verarbeitet und Änderungen werden erkannt. Es kann z. B. ein Einschaltevent oder ein Abschaltevent als Einzelphänomen erkannt werden. Weitere Einzelphänomene können zum Beispiel eine langsame oder eine schnelle Verbrauchsänderung sein (Flackern).

Die Messwerte werden in der Datenaggregation 36 je nach Intervall aus neuen Daten und historischen Daten aus der Datenbank aggregiert, so dass zum Beispiel der Verbrauch eines erkannten Verbrauchers über einen vorbestimmten Zeitraum, berechnet wird. Es werden die z. B. sekündlich abgetasteten Daten gesammelt, um sie in einer Vorverarbeitung auf z. B. 5 min zu aggregieren. Die Messwerte werden dabei nach Verbraucher aggregiert. Zusätzlich wird der Gesamtverbrauch aggregiert, also der Gesamtverbrauch pro Haushalt.

Die Datenbank 38 sendet auch an die Datenaggregation 36. Hier werden z. B. Prozesse angestoßen, um die auf 5 min aggregierten Daten zu einer Stunde zu aggregieren, die Stunden zum Tag, die Tage zur Woche, die Wochen zu Monat und die Monate zum Jahr.

Die Geräteerkennung 32 sendet an die Datensammlung 34, ob ein neuer Verbraucher im Netz 11 erkannt wurde (Einschalten), ein Verbraucher nicht mehr erkannt wurde (Ausschalten) oder ob es eine Veränderung im Verbrauch pro erkanntem Verbraucher gibt.

Die Datensammlung 34 übergibt an den Webservice 40 die Events, die in den Messwerten erkannt wurden. Über den Webservice 40 kann der Nutzer aber auch ein Feedback zur Verbesserung der Erkennungsleistung pro Heimbereich an die Datensammlung 34 senden. Dieses kann dann an die Geräteerkennung 32 weitergeleitet werden. Der Nutzer kann die Richtigkeit der Erkennung bestätigen bzw. angeben, dass das erkannte "Gerät" einer andern Geräteklasse zugeordnet wird. Er kann also eine Falscherkennung korrigieren.

Der Webservice 40 kann an die Datenbank 38 die dargestellten Daten und/oder das Feedback zur Archivierung übermitteln. Wenn sich der Nutzer anmeldet, können zudem alle "historischen" Daten bis zum Zeitpunkt der Anmeldung aus der Datenbank 38 an den Webservice 40 zur Visualisierung übermittelt werden.

Abschließend werden die Daten auf dem Webservice 40 für den Nutzer visualisiert, z. B. in einem Browser. Die Daten können aber auch in den Heimbereich 10 versendet und dort mittels einer graphischen Benutzerschnittstelle 18 dargestellt werden. Vorteilhafterweise findet jedoch die Visualisierung mittels eines Webservice 40 statt, welches dem Nutzer die Gelegenheit gibt, seinen Stromverbrauch von einem beliebigen Ort aus zu analysieren und zu visualisieren. Auch ist es möglich, den Stromverbrauch sowohl im Heimbereich 10 als auch mittels des Webservice 40 darzustellen. Das in der Geräteerkennung 32 eingesetzte Verfahren basiert auf der Disaggregation von Verbrauchern in privaten Haushalten einzig auf Basis der Daten handelsüblicher intelligenter elektronischer Stromzähler 13.

Da die Daten mit einer sehr niedrigen Frequenz von kleiner 5 Hz und größer gleich 0,2 Hz bereitgestellt werden, werden die gemessenen Signalverläufe auf der Makroebene der Signaltechnik verarbeitet und analysiert.

Die Mess- und Analysefunktion erfordert vorteilhafterweise keine zusätzlichen Geräte im Haushalt. Dadurch müssen keine neuen, aufwändigeren Stromzähler 13 oder zusätzliche Messstellen eingesetzt werden und die Gesamtlösung ist wirtschaftlich günstiger. Zusätzliche Geräte werden nur zur Übertragung der Messwerte genutzt.

Der Lösungsansatz beruht darauf, dass eine Kombination moderner Methoden der künstlichen Intelligenz verwendet wird. Die Nachteile der Datenmessung im herkömmlichen elektronischen Stromzähler 13, insbesondere die niedrige Messfrequenz, werden durch intelligente Analyseverfahren ausgeglichen.

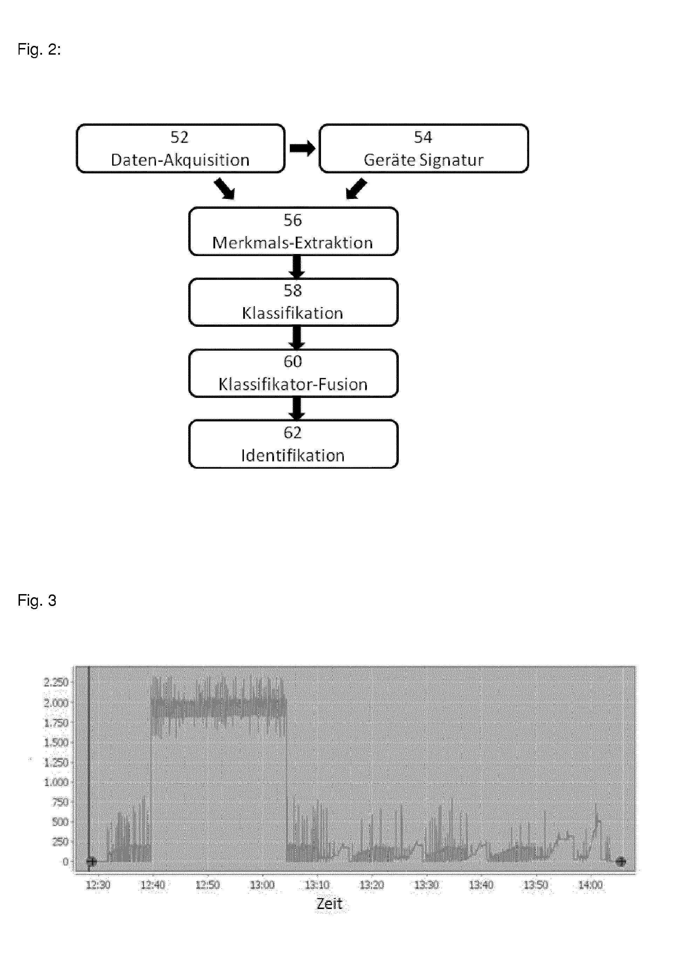

Die vom intelligenten Stromzähler 13 bereitgestellten Merkmale Stromstärke, Spannung und Phasenverschiebung ergeben die Hauptmerkmale Schein-, Wirk-und Blindleistung. Diese sind der Ausgangspunkt für die Merkmalsextraktion und die Klassifizierungsverfahren. Weitere Merkmale, die berücksichtigt werden, sind Nutzerprofile, historische Daten, Wetterdaten und Jahreszeiten sowie weitere wissensbasierte Quellen. Figur 2 skizziert den grundsätzlichen Ablauf des Klassifikations- und Erkennungsverfahren. Es werden zunächst die Daten akquiriert 52, es werden Merkmale aus dem Signal extrahiert 56 und auf verschiedene Arten klassifiziert 58. Die einzelnen Klassifikatoren werden kombiniert 60 und man gelangt schließlich zur Identifikation 62 eines Verbrauchers in den Messwerten.

Die elektrischen Geräte eines privaten Haushaltes lassen sich in vier Zustandskomplexitätsklassen einteilen:

| Klasse | Beschreibung |
|---|---|
| 1 (Konstanter Verbrauch) | Das Gerät hat einen einzigen Zustand mit konstantem Verbrauch, eventuelle beschränkte Varianz unbenommen, z. B. Lampe, Toaster, Wasserkocher, Telefonanlage, HiFi-Geräte im Stand-By |
| 2 (Feste Abfolge) | Das Gerät hat eine deterministische Zustandsfolge und - dauer. Bsp.: Spülmaschine, Waschmaschine, Wäschetrockner, Mikrowellengerät |
| 3 (Variable Abfolge) | Das Gerät verfügt über mehrere Zustände, deren Ablauf aber nicht vorhersagbar ist, sondern dynamisch vom System oder Benutzer gesteuert wird. z.B. Kaffeemaschine, Herd, Kühlschrank |
| 4 (Hochvariabel) | Das Gerät hat einen einzigen Zustand, in dem kein Muster erkennbar ist bzw. die Varianz zu groß ist. z.B. PC, Bohrmaschine |

Die Kernaufgabe besteht darin, den gleichzeitigen Betrieb mehrerer Verbraucher zu disaggregieren und das Verfahren auf den Betrieb in einer Anzahl von n Haushalten gleichzeitig zu skalieren.

Die vorliegende Erfindung arbeitet anhand angepasster Verfahren der künstlichen Intelligenz, insbesondere der Signalverarbeitung und der Mustererkennung, die in der Lage sind, einzelne Verbrauchsprofile in dem komplexen, überlagerten Signal zu erkennen, und sie den richtigen Geräteklassen zuzuordnen. Durch Algorithmen und Klassifikatoren der künstlichen Intelligenz werden Profile einzelner Verbraucher gebildet. Diese basieren auf zeitorientierten als auch einzelphänomenbasierten Logiken. Zusätzlich werden die Klassifikatoren in Kombinationen einzelnen Geräteklassen zugeordnet.

Das eingesetzte Verfahren ist eine Methodik zur automatischen Erkennung der in einem Haushalt eingeschalteten elektrischen Geräte auf der Basis von Merkmalsextraktions- und Mustererkennungsverfahren für die Einzelgeräteerkennung und für die Disaggregation von elektrischen Endverbrauchern anhand der Daten eines intelligenten Stromzählers 13. Die Verfahren die im Rahmen der Erkennungsverfahren zur nicht-intrusiven Erkennung von Verbrauchern im Haushalt genutzt werden, basieren auf zwei Grundprinzipien. Es werden zum Einen zeitliche Regelmäßigkeiten individueller Verbraucher durch eine Spektralanalyse auf der Makroebene modelliert. Dieses Prinzip wird im Folgenden Spektralanalyse genannt. Zum anderen werden ein oder mehrere prägnante Einzelphänomene durch spezielle Detektoren, auch Merkmalsextraktoren genannt, modelliert. Dieses Verfahren wird als Einzelphänomenanalyse bezeichnet. Bei der Einzelphänomenanalyse werden die Profile einzelner Verbraucher in einem separaten und/oder gemeinsamen Modell abgebildet, damit im Betrieb Verbraucher direkt identifiziert werden können.

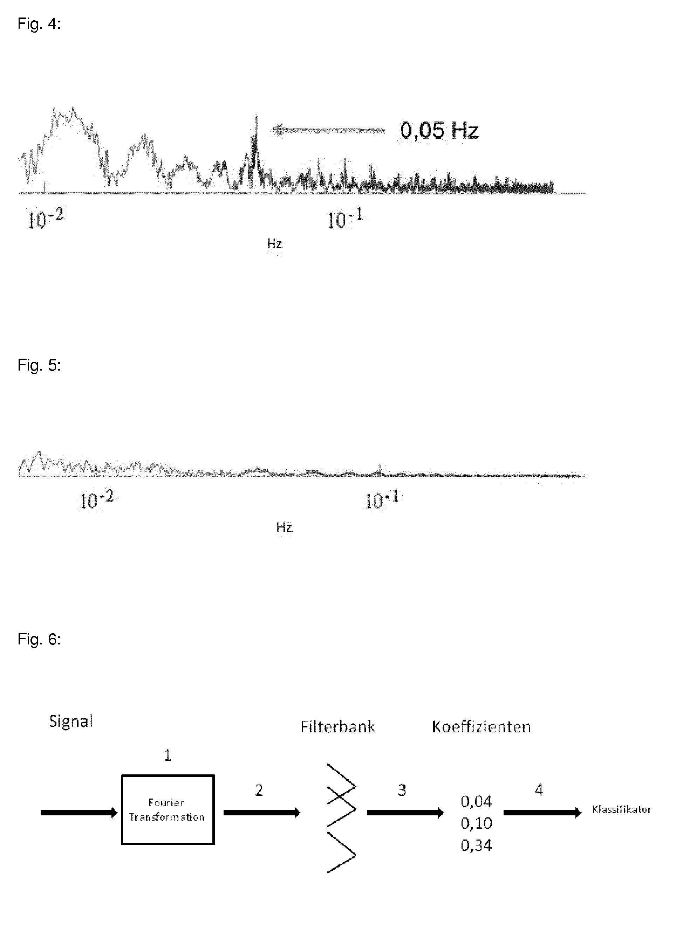

Zunächst soll die Spektralanalyse näher beschrieben werden. Eine Spektralanalyse eines Eingangssignals S eines Verbrauchers erfolgt in der Regel durch eine Fourier-Transformation, bei der das Eingangssignal S als Funktion der Energie über der Zeit in eine dreidimensionale Darstellung von Zeit, Energie, und Frequenz überführt wird, das so genannte Piktogramm. Figur 3 zeigt beispielsweise das Eingangssignal S einer Waschmaschine. Auf der Y-Achse ist die Wirkleistung dargestellt. Es sind Regelmäßigkeiten in dem Signal erkennbar, die mit dem Programmablauf der Waschmaschine korrespondieren. Die Regelmäßigkeiten wiederholen sich mit unterschiedlicher Häufigkeit; je länger die Abstände zwischen zwei Instanzen sind, desto niedriger ist die Frequenz. Figur 4 stellt dasselbe Signal nach einer Fourier-Transformation in Form eine Frequenzdiagramms (Frequenz als Funktion der Zeit) dar. Es sind hier deutliche Muster erkennbar, die mit den Regelmäßigkeiten aus der vorangehenden Abbildung korrespondieren. Besonders prägnant ist die mit dem Pfeil gekennzeichnete Erhebung, die bei einer Frequenz von 0,05 Hz liegt, was einer Wiederholrate von 20 Sekunden entspricht. Dieses Muster an Erhebungen im Frequenzdiagramm kann als der individuelle Fingerabdruck der Waschmaschine angesehen werden. Zum Vergleich wird in Figur 5 der Fingerabdruck eines Wäschetrockners aus derselben Datensammlung dargestellt, der deutlich anders ist.

Der Unterschied dieser Analyse zu klassischen Fällen, in denen eine Fourier-Transformation angewendet wird, wie beispielsweise der digitalen Akustik, besteht darin, dass die Wiederholraten im Makrobereich liegen. Dadurch ist es möglich, dass selbst mit einer sehr niedrigen Messauflösung von z. B. 1 Hz eine Spektralanalyse durchgeführt werden kann. Allerdings bringt dieser Umstand es auch mit sich, dass eine vergleichsweise lange Zeitspanne aufgezeichnet werden muss, bis die temporalen Phänomene sichtbar werden. Im Fall der prägnanten Erhebung bei der Waschmaschine müssen wir mindestens 20 Sekunden warten, bis die erwartete Energiemenge bei 0,05 Hz erkannt werden kann.

Vorteilhafterweise sind mittels der Spektralanalyse Regelmäßigkeiten in der Frequenzdomäne auch dann noch erkennbar, wenn das Signal verrauscht ist. Unter Rauschen werden Veränderungen im Signal S verstanden, die nicht auf den "gesuchten" Verbraucher zurückzuführen sind, also andere Verbraucher oder Störungen. Figur 6 ist eine schematische Darstellung des Erfindungsgemäßen Spektralverfahrens. Ein Signal wird zunächst Fouriertransformiert, gefiltert, es werden Koeffizienten extrahiert und ein Klassifikator erzeugt.

Auf Basis des ursprünglichen Signals wird zunächst eine Fourier-Transformation durchgeführt (Schritt 1). Anschließend wird eine Filterbank angewendet (Schritt 2), um die relevanten Frequenzbereiche im Signal in diskrete Werte (Koeffizienten) zu überführen (Schritt 3), die wiederum als eigentlicher Merkmalsvektor in einen Klassifikator gespeist werden (Schritt 4). Im Beispiel der Waschmaschine liegt dann die Spitze eines der Filter bei 0,05 Hz. Dieser Filter wird einen hohen Wert bei der Waschmaschine zurückliefern, während beispielsweise der Trockner einen eher niedrigen Wert erzeugen würde. Dasselbe gilt für alle weiteren Filter.

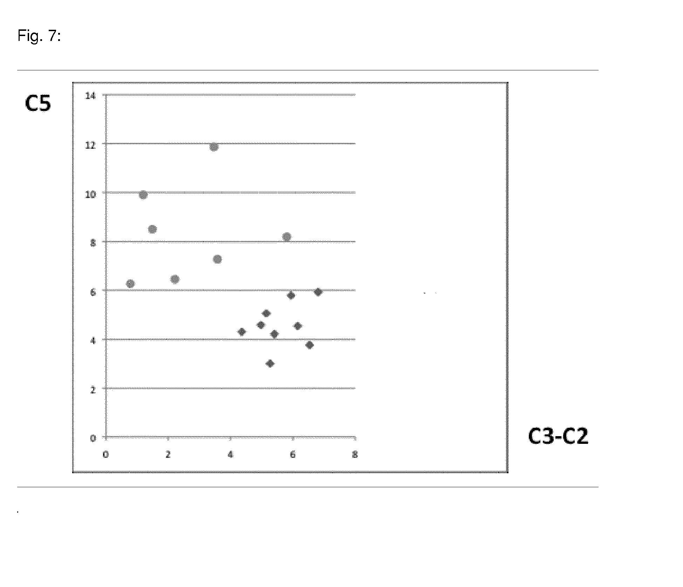

Betrachtet man nun wie in Figur 7 gezeigt nur die Koeffizienten, die bei der Spektralanalyse errechnet wurden (ohne Schritt 4, d.h. ohne komplexen Lernalgorithmus), kann man die Unterscheidungskraft des Verfahrens bereits deutlich erkennen. Figur 7 stellt einen so genannten Scatterplot dar. Hier handelt es sich um eine zweidimensionale Projektion des Merkmalsraums, der sich aus einer einfachen linearen Kombination der errechneten Koeffizienten ergibt. Die Kreise sind Werte aus mehreren Durchläufen (auch unterschiedliche Programmeinstellungen) der Waschmaschine, die Rhomben sind andere Geräte im Test (hier Trockner, Spülmaschine). Es ist offensichtlich, dass eine Klassifikation mit einer Genauigkeit von 100% durch die Wahl einer entsprechenden Entscheidungsfunktion erreicht werden kann.

Parallel zur Spektralanalyse wird die sogenannte Einzelphänomenanalyse durchgeführt.

Als ein Beispiel für prägnante Einzelphänomene werden im Folgenden Sprünge in den Messwerten um -Δ und +Δ der Leistung erläutert, d.h. "Sprünge" nach oben und unten, die separat voneinander und im Verhältnis zueinander gemessen werden. Zusätzlich zu den Sprüngen wird die Länge (Zeit) eines Impulses zwischen +Δ und -Δ gemessen. Dabei entstehen Cluster, die bestimmten Verbrauchern zugewiesen werden. Der Ort der markierten Cluster sowie deren Lage im Raum stellen charakteristische Merkmale dar. Des Weiteren kommen bei der Klassifikation der Einzelphänomene Nutzerprofile wie auch wissensbasierte Ansätze zum Einsatz um die Erkennungswahrscheinlichkeit besser abschätzen zu können.

Bei Zunahme der Anzahl der Merkmale (höherdimensionale Merkmalsvektoren) kommen die bekannten Verfahren zum Einsatz, die eine entsprechend komplexe Unterscheidungslinie erzeugen. Zu diesen Verfahren gehören u. a. "Multilayer Perceptron Artificial Neural Networks" (MLP ANN) sowie "Support Vector Machines" (SVM).

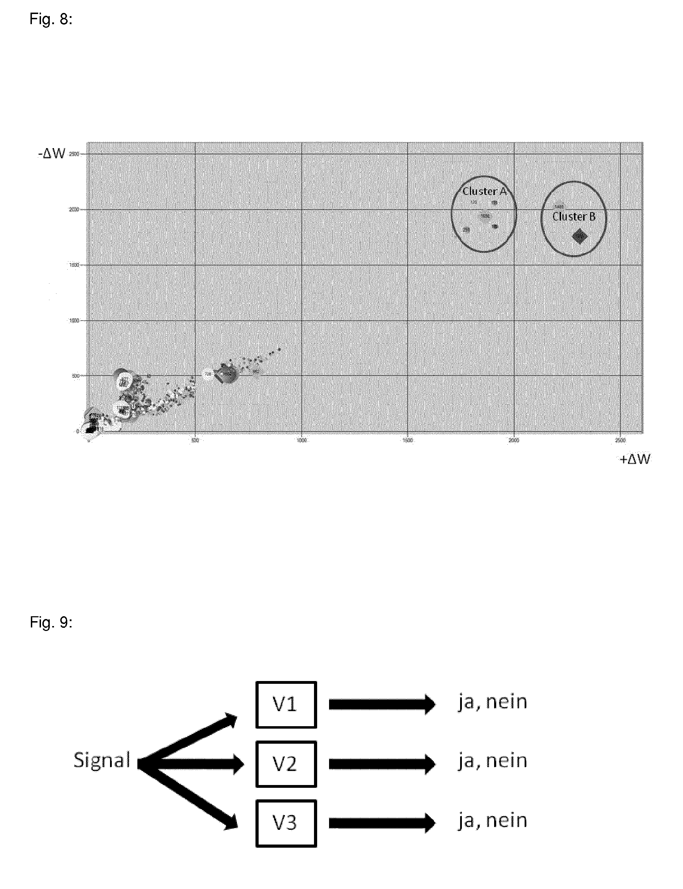

Eine solche Analyse der Waschmaschine stellt Figur 8 dar. Der Ort der beiden markierten Cluster sowie deren Lage im Raum stellen charakteristische Merkmale dar. Im vorliegenden Beispiel können einfache Schwellwerte eingeführt werden, um zwischen Waschmaschine (= "target") und anderen Geräten (= "non-target") zu unterscheiden.

Konkret werden zur Einzelphänomenanalyse unterschiedliche Verfahren eingesetzt, von denen einige im Folgenden beispielhaft dargestellt werden sollen. Elektrische Verbraucher können grundsätzlich in ohmsche Verbraucher, induktive Verbraucher und kapazitive Verbraucher eingeteilt werden. In der Realität kommen davon Mischformen vor, die aus einer Kombination der drei Grundverbraucher besteht. Daher ist es notwendig Klassifizierungsverfahren einzusetzen, welche auf der einen Seite unterschiedlichste Erkennungsansätze unterstützten und des Weiteren eine Kombination von Ergebnissen (Klassifizierer-Ergebnisse) erlaubt bzw. benutzt und darüber hinaus ein hierarchisches Nachklassifizieren ermöglicht.

Um einen größtmöglichen Erkennungsraum abzudecken, werden die unterschiedlichen Verbraucher in Oberklassen eingeteilt, welche dann in einem zweiten Schritt in Unterklassen zergliedert werden. Dieser Schritt dient dazu, die einzelnen Klassifizierungsverfahren verschiedenen Verbrauchern sinnvoll zuzuordnen und sie auf oberer Ebene nach der Erkennung wieder zusammenzuführen. Dabei wird ein Sortiment unterschiedlicher Basis-Klassifizierer verwendet. Zusätzlich werden Meta-Klassifizierer zur Optimierung der Erkennungsleistung eingesetzt.

Der Klassifikator "BlockLoad" erkennt typische "Block-Verbraucher" wie. z. B. Toaster, Wasserkocher, Föhn, Mixer etc. Dies sind Verbraucher, die während der Laufzeit keine signifikante Änderung im Leistungsbereich haben. Es liegt ein konstanter Verbrauch während des eingestellten Programm bzw. bei unveränderter Leistungsstufe vor (z.B. Föhn Stufe 1, 2, 3 etc.). Die Erkennung basiert auf dem Deltasprung zum Anfang bzw. Ende eines Blockverbrauchs und dem Momentan-Verbrauch zwischen den Änderungen.

Der Klassifikator "ExtremumDelta" basiert wie "BlockLoad" auf einer Deltaänderung im Leistungsbereich. Er kann dabei mehrere auch verschaltete Blöcke unterscheiden. Dabei werden Sprünge bestimmter Anzahl und Länge in gerätespezifische "Cluster" einsortiert.

"FrequencyCoefficents" beruht auf der Fourier-Transformation und transformiert das Signal in den Zeitbereich. Der Klassifikator extrahiert die Spektralkoeffizienten zur Erstellung eines Merkmalsvektors.

"StateMachine" wird genutzt, wenn Verbraucher eine feste Abfolge von "Zuständen" aufweisen. Ein solcher Verbraucher hat festdefinierte Übergänge zum nächsten Zustand.

Ein "MarkovModel" wird dann genutzt, wenn Geräte aus einer dynamischen Abfolge von "Zuständen" bestehen. Es bildet Wahrscheinlichkeiten von Übergängen zwischen Zuständen ab.

"SimpleThreshold" verwendet Metriken mit verschiedenen Deltasprüngen um Verbraucher zu erkennen, bei denen kontinuierliche Anstiege und Abfälle im Leistungsbereich über die Laufzeit erfolgen. Es wird die Häufigkeit von Schwellwertänderungen (Deltasprünge) über den zeitlichen Verlauf periodisch wiederkehrender Merkmale definiert.

Es können zudem die im Folgenden dargelegten Meta-Klassifikatoren verwendet werden. "LongTerm" überbrückt "Null Verbräuche" bei Geräten, die nicht während der gesamten Laufzeit prägnante Muster aufweisen, wie z. B. ein Kühlschrank, eine Tiefkühltruhe. Diese Verbraucher sind bei sehr geringen bis gar keinem Verbrauch dauerhaft "an". Der Klassifikator "Windowed" berücksichtig statt nur des letzten Klassifizierungs-Ereignisses die letzten X Sekunden und verhindert damit ein Flackern bei der Erkennung. "RealReactiveCrossover" berücksichtig die Veränderung über Kreuz zwischen Schein- und Blindleistung während der Laufzeit. Dieser wird speziell bei Geräten verwendet die Intern mit sehr hohen Frequenzen arbeiten (z.B. Mikrowelle).

Ebenso wichtig ist die Definition des Erkennungsproblems. In der vorliegenden Erfindung wird der sogenannte "Detection Task" verwendet. Hier wird wie in Figur 9 gezeigt für jeden Verbrauch ein separates Modell erzeugt, welches angibt, ob der jeweilige Verbraucher (= "target") im Signal vorhanden ist oder nicht. Veränderungen in der Verbraucherkonstellation führen in dem Fall lediglich zur Hinzunahme oder Deaktivierung von Modellen. Des Weiteren kann die Performanz des Systems als Ganzes besser bewertet werden.

Jedoch können auch aus den separaten Verbrauchermodellen gemeinsame Verbrauchermodelle gebildet werden. Die separaten und/oder gemeinsamen Verbrauchermodelle können vorteilhafterweise zusätzlich für "Machine Learning" Verfahren genutzt werden, die zur automatisierten Verbesserung des Erkennungssystem dienen.

In einem Ausführungsbeispiel wird die Einzelphänomenanalyse allein zur Erkennung eines Verbrauchers verwendet. Bevorzugt werden aber Spektralanalyse und Einzelphänomenanalyse zusammen zur Erkennung eingesetzt. Die Spektralanalyse kann zur Bestätigung bzw. Bekräftigung der Früherkennung genutzt werden, d.h. zur Bestätigung andere Klassifizierer. Sie kann des Weiteren zur Langzeiterkennung verwendet werden. Die Vergleichswerte der Spektralanalyse, die Merkmalsvektoren, können Bestandteil der Geräteerkennungsalgorithmen sein.

Im Folgenden soll beispielsweise ein Entscheidungskriterium für eine erfolgreiche Erkennung erläutert werden. Es können aber auch andere Entscheidungskriterien zum Einsatz kommen.

Ein Zeitpunkt t repräsentiere einen Einschaltzeitpunkt, einen Ausschaltzeitpunkt, oder Leistungsänderungszeitpunkt. Wenn zu einem späteren Zeitpunkt t ± Δ ein Verbraucher erkannt wird und es einem Verbraucherprofil eindeutig zugeordnet werden kann, wird es als "erfolgreich erkannt" bewertet. Dies entspricht einem Einschaltevent. Analog gilt dieses für die Erkennung eines Abschaltevents. Wird zu einem Zeitpunkt t ± Δ das Gerät im Signal nicht mehr erkannt, wird es als erfolgreich "nicht-erkannt" bewertet (Abschaltevent). Wird zu einem Zeitpunkt t ± Δ eine Signaländerung (Änderung ± der Leistungswerte) erkannt und diese einem erfolgreich erkannten Verbraucher zugeordnet, wird der Änderungsevent als "erfolgreich erkannt" bewertet. Die Zeitspanne Δ kann verbraucherklassenspezifisch sein und kann zwischen einigen Sekunden und mehreren Minuten, z. B. einer typischen Laufzeit eines Gerätes variieren.

Das Δ kann im unteren Zeitbereich (Sekundenebene) ± 20% variieren, und im oberen Zeitbereich (Minutenebene) ± 5% variieren.

Vorteilhafterweise können aufgrund der Auslagerung der Analyse und Erkennung aus dem Heimbereich 10 auf einen vom Heimbereich 10 entfernten Server in der Datensammlung 34 und der Datenbank 38 Informationen einer Vielzahl von Verbrauchernetzen 11 einfließen und die Genauigkeit der Erkennung erhöhen. So kann z. B. ein in einem Netz 11 erkannter Verbraucher, z. B. eine Klimaanlage, schneller und sicherer auch in einem anderen Netz 11 erkannt werden. Das Nutzerverhalten einer Vielzahl von Nutzern kann zentral verwaltet werden und für jeden einzelnen Nutzer einen Mehrwert bedeuten. Die Auslagerung ermöglicht es zudem, immer wieder neue Klassifikatoren für neue Geräte zentral bereitzustellen, ohne das es einer Änderung im Heimbereich 10 bedarf. Dies ist ein wesentlicher Vorteil gegenüber den bekannten Systemen des Standes der Technik.

## Patentansprüche

1. Verfahren zur Analyse und Anzeige des Energieverbrauchs von elektrischen Verbrauchern, umfassend die Schritte:
Bereitstellen mindestens eines Verbrauchernetzes (11) umfassend eine Mehrzahl von zusammen geschalteten elektrischen Verbrauchern,
Abtasten (13) von Gesamtstrom, Spannung und Phasenverschiebung des Verbrauchernetzes (11) mit einer Abtastrate von kleiner 5 Hz,
Senden der abgetasteten Messwerte über das Internet (20) an ein Mittel zur Verbrauchererkennung (32),
Empfangen der abgetasteten Messwerte über das Internet (20) durch das Mittel zur Verbrauchererkennung (32),
Bestimmen einzelner Verbraucher in den Messwerten durch das Mittel zur Verbrauchererkennung (32) umfassend mindestens einen der Schritte gebildet aus der Gruppe von Schritten:
Bestimmen temporaler Regelmäßigkeiten individueller Verbraucher durch eine Spektralanalyse der Messwerte; und
Erzeugen von separaten und/oder gemeinsamen Verbrauchermodellen für einzelne Verbraucher durch Modellierung von Einzelphänomenen in den Messwerten mittels Klassifikatoren; und
Visualisieren des Energieverbrauchs in dem Verbrauchernetz.

2. Verfahren nach Anspruch 1, wobei eine Vielzahl von Verbrauchernetzen (11) vorhanden sind und in dem Mittel zur Verbrauchererkennung (32) die Messwerte der Vielzahl von Verbrauchernetzen (11) zur Bestimmung einzelner Verbraucher in einem Verbrauchernetz (11) verwendet werden.

3. Verfahren nach Anspruch 1 oder 2, wobei der Nutzer über ein Webservice (40) die Erkennung von Verbrauchern in Verbrauchernetz (11) bestätigen oder ändern kann.

4. Verfahren nach einem der vorhergehenden Ansprüche, wobei die Spektralanalyse für die Langzeiterkennung von Verbrauchern in den Messwerten eingesetzt wird.

5. Verfahren nach einem der vorhergehenden Ansprüche, wobei die Spektralanalyse zur Bestätigung bzw. Bekräftigung der Früherkennung von Einzelphänomen in den Messwerten genutzt wird.

6. Verfahren nach einem der vorhergehenden Ansprüche, wobei die Abtastfrequenz kleiner 2 Hz, bevorzugt kleiner gleich 1 Hz, und größer gleich 0,5 Hz, bevorzugt größer gleich 0,2 Hz ist.

7. Verfahren nach einem der vorhergehenden Ansprüche, wobei die Energieauflösung der Abtastung kleiner 5 Watt, bevorzugt kleiner 2 Watt ist, noch bevorzugter 1 Watt beträgt.

8. Verfahren nach einem der vorhergehenden Ansprüche, wobei Nutzerprofile, historische Daten, Wetterdaten oder Jahreszeiten in die Merkmalsextraktion einfließen.

9. System (100) zur Analyse und Anzeige des Energieverbrauchs von elektrischen Verbrauchern, umfassend:
ein Verbrauchernetz (11) umfassend eine Mehrzahl von zusammen geschalteten elektrischen Verbrauchern,
einen intelligenten Stromzähler (13), der mit dem Verbrauchernetz (11) elektrisch verbunden und geeignet ist, den Gesamtstrom, die Spannung und die Phasenverschiebung des Verbrauchernetzes (11) mit einer Frequenz von kleiner 5 Hz abzutasten,
ein Kommunikationsmodul (14) mit einem ersten Datenspeicher, geeignet die Messwerte des intelligenten Stromzählers (13) auszulesen und zwischenzuspeichern,
ein Homegateway (16) zum Auslesen der Messwerte aus dem Kommunikationsmodul (14) und Versenden der Messwerte über das Internet,
eine Datensammlung (34) zum Empfangen der vom Homegateway (16) gesendeten Messwerte,
ein Mittel zur Verbrauchererkennung (32) zur Erkennung einzelner Verbraucher im Verbrauchernetz (11) aus den empfangenen Messwerten welches dazu ausgebildet ist, temporale Regelmäßigkeiten individueller Verbraucher durch eine Spektralanalyse der Messwerte zu bestimmen, und/oder Verbrauchermodelle für einzelne Verbraucher durch Modellierung von Einzelphänomenen in den Messwerten mittels Klassifikatoren zu erzeugen, und
eine Visualisierungseinheit (40) zur Anzeige des Energieverbrauchs der Verbraucher des Verbrauchernetzes (11).

10. System nach Anspruch 9, wobei das Kommunikationsmodul (14) in dem intelligenten Stromzähler (13) integriert ist.

11. System nach Anspruch 9 oder 10, wobei eine Vielzahl von Verbrauchernetzen (11) vorhanden sind und in dem Mittel zur Verbrauchererkennung (32) die Messwerte der Vielzahl von Verbrauchernetzen (11) zur Bestimmung einzelner Verbraucher in einem Verbrauchernetz (11) verwendet werden.
